# EUROPÄISCHE PATENTSCHRIFT

(11) **EP 2 126 419 B1**
(45) Veröffentlichungstag und Bekanntmachung des Hinweises auf die Patenterteilung: **03.09.2014**
(21) Anmeldenummer: 08734497.4
(22) Anmeldetag: 10.03.2008
(51) Int. Cl.: F16H 61/24, F16H 59/10

(54) **BETÄTIGUNGSEINRICHTUNG MIT WÄHLHEBELRÜCKFÜHRUNG**
OPERATING DEVICE WITH SELECTOR LEVER RETURN
DISPOSITIF D'ACTIONNEMENT À MÉCANISME DE RETOUR DU LEVIER DE SÉLECTION

(30) Priorität: 28.03.2007 DE 102007015375
(43) Veröffentlichungstag der Anmeldung: 02.12.2009
(73) Patentinhaber: ZF Friedrichshafen AG, 88038 Friedrichshafen (DE); AUDI AG, 74148 Neckarsulm (DE)
(72) Erfinder: KLIEMANNEL, Wolfgang, 49448 Lemförde (DE); RAKE, Ludger, 49356 Diepholz (DE); ROSENTRETER, Sascha, 32339 Espelkamp (DE); MERKLEIN, Harald, 85139 Wettstetten (DE); GIEFER, Andreas, 49448 Lemförder (DE)
(86) Internationale Anmeldenummer: PCT/DE2008/050005
(87) Internationale Veröffentlichungsnummer: WO 2008/116461

(56) Entgegenhaltungen:
- EP-A- 1 752 688
- WO-A1-2008/116437
- DE-A1- 10 005 328
- DE-A1-102004 034 559
- DE-A1-102005 053 610

## Beschreibung

Die Erfindung betrifft eine Betätigungseinrichtung für ein Gangwechselgetriebe, insbesondere für ein Automatgetriebe mit shift-by-wire-Betätigung, gemäß dem Oberbegriff des Patentanspruchs 1. Eine solche Betätigungseinrichtung ist beispielsweise aus der Druckschrift DE 10 2004 034 559 A1 bekannt. Eine weitere Betätigungseinrichtung ist aus der Druckschrift WO 2008/116437 A1 bekannt, welche ein Stand der Technik nach Art. 54 (3) EPÜ ist. Diese offenbart neben den oberbegrifflichen Merkmalen des Patentanspruchs 1 eine Trenneinrichtung, welche geeignet ist, den Rastbolzen und die Rastkulisse aus einer ersten Relativstellung in eine weitere Relativstellung zu verbringen.

Gangwechselgetriebe von Kraftfahrzeugen werden üblicherweise mittels einer im Griffbereich des Fahrers angeordneten Betätigungseinrichtung gesteuert bzw. geschaltet. Regelmäßig kommen hierzu Betätigungselemente wie Schalthebel oder Wählhebel zum Einsatz, die beispielsweise zwischen den Frontsitzen des Kraftfahrzeugs angeordnet sind.

Die konstruktiven und ergonomischen Anforderungen an solche Betätigungseinrichtungen bzw. Wählhebel für Gangwechselgetriebe sind dabei vielfältig. Um beispielsweise dem Fahrer aus Gründen der Sicherheit und Ergonomie ein realistisches Gefühl der Getriebebetätigung zu vermitteln, wird für gattungsgemäße Betätigungseinrichtungen gefordert, dass dem Fahrer sowohl optische wie auch klare haptische bzw. taktile Rückmeldungen vermittelt werden. Hieraus soll der Fahrer bei der Betätigung des Wählhebels auf den im Getriebe tatsächlich erfolgten Schaltvorgang schließen können. Ebenso soll es für den Fahrer möglich sein, mit einem Blick oder einem Griff zum Wählhebel intuitiv den momentanen Schaltzustand des Getriebes erfassen zu können.

Es ist somit wünschenswert, dem Fahrer anhand der jeweiligen Momentanposition bzw. Winkelstellung des Wählhebels eine klare optische und hapüsche Rückmeldung über den aktuellen Getriebezustand bzw. über die tatsächlich eingelegte Fahrstufe zu vermitteln.

Im Fall einer mechanischen Getriebebetätigung bzw. einer mechanischen Kopplung zwischen Wählhebel und Gangwechselgetriebe - beispielsweise mittels Seilzug oder Gestänge - stimmt die Wählhebelstellung aufgrund der mechanischen Kopplung stets mit der tatsächlichen Getriebestellung überein. Da mechanisch betätigte Gangwechselgetriebe im Allgemeinen multistabil sind (die Getriebeschaltstellung ist stabil in mehreren bzw. allen Positionen, verändert sich also nicht selbsttätig), ist auch der zugehörige Wählhebel multistabil und verbleibt somit stets in der jeweils vom Fahrer eingelegten Stellung.

Der Fahrer kann demzufolge einerseits von der jeweiligen Wählhebelstellung auf den aktuellen Schaltzustand des Getriebes schließen, bzw. anhand der Wählhebelstellung die im Getriebe jeweils eingelegte Fahrstufe erkennen, und sich andererseits darauf verlassen, dass die Wählhebelstellung nicht vom tatsächlichen Schaltzustand des Getriebes abweicht.

Im Fall der zunehmend eingesetzten elektrischen Betätigung bzw. der shift-by-wire-Betätigung von Gangwechselgetrieben existiert jedoch keine mechanische Kopplung mehr zwischen dem Betätigungselement bzw. Wählhebel in der Fahrgastzelle und dem Kraftfahrzeuggetriebe im Motorraum. Vielmehr erfolgt die Übertragung der Schaltbefehle von der Betätigungseinrichtung zum Kraftfahrzeuggetriebe im Fall der "shift-by-wire"-Getriebe zumeist ausschließlich mittels elektrischer oder elektronischer Signale und anschließender zumeist elektrohydraulischer Umsetzung der Schaltbefehle. Dies gilt teilweise sowohl für moderne Gangwechselgetriebe, insbesondere jedoch für die aktuellen Generationen der Automatgetriebe, welche zumeist komplett aktuatorisch fernbetätigt werden.

Im Fall der shift-by-wire-betätigten Gangwechselgetriebe kann die fehlende mechanische Verbindung zwischen der Getriebeaktuatorik und dem Wählhebel jedoch dazu führen, dass die Wählhebelstellung unter bestimmten Rahmenbedingungen oder im Fehlerfall nicht mehr mit dem Schaltzustand des Getriebes übereinstimmt.

So weisen moderne Automatgetriebe im Allgemeinen eine so genannte Auto-P-Funktion auf, die dafür sorgt, dass beim Verlassen des Fahrzeugs stets die Parksperre im Getriebe eingelegt wird, um so etwa ein Wegrollen des unbeaufsichtigten Fahrzeugs zu unterbinden. Die Auto-P-Funktion, die beispielsweise dann in Aktion tritt, wenn der Zündschlüssel abgezogen oder das Fahrzeug verlassen wird, sorgt mit anderen Worten für das automatische Einlegen der Parksperre im Getriebe, unabhängig von der tatsächlich am Wählhebel angewählten Fahrstufe. Die Parksperre wird durch die Auto-P-Funktion des Getriebes bzw. des Fahrzeugs somit auch dann eingelegt, wenn der Wählhebel vom Fahrer tatsächlich beispielsweise in der Neutralstellung oder in einer der Fahrstufenstellungen belassen wurde.

In diesem Fall stimmt jedoch die Wählhebelstellung nicht mehr mit dem tatsächlichen Schaltzustand des Getriebes überein. Bei der Rückkehr zum Fahrzeug, bzw. bei einem Startversuch des Fahrzeugs wird anhand der Wählhebelstellung sowohl optisch als auch haptisch somit eine unzutreffende Information an den Fahrer gegeben. Anhand der Wahrnehmung der Wählhebelstellung geht der Fahrer davon aus, dass sich das Getriebe beispielsweise in der Neutralstellung oder in einer Fahrstufenstellung befindet, während im Getriebe hingegen tatsächlich die Parksperre eingelegt ist. Diese Diskrepanz zwischen der Wählhebelstellung und dem Getriebezustand kann somit zu unerwünschten Fehlbedienungen, zu Fehlschlüssen durch den Fahrer und damit auch zu sicherheitskritischen Situationen führen; bzw. es muss eigens eine zusätzliche Signaleinrichtung für den Fahrer vorgesehen werden, die dem Fahrer für den Fall der per Auto-P eingelegten Parksperre signalisiert, dass das Fahrzeug erst gestartet werden kann, wenn der Wählhebel manuell in die Parksperrenstellung gebracht wird.

Es ist versucht worden, der dargestellten Problematik damit zu begegnen, dass die Wählhebel von shift-by-wire-Gangwechselgetrieben als monostabile Betätigungselemente ausgebildet worden sind. Mit anderen Worten bedeutet dies, dass ein solcher monostabil ausgebildeter Wählhebel nach jeder Betätigung stets wieder in dieselbe Mittelstellung zurückkehrt. Die Rückmeldung über den tatsächlichen Schaltzustand des Getriebes bleibt bei einem monostabilen Wählhebel somit ausschließlich einer separaten Anzeige beispielsweise mittels Leuchtdioden überlassen. Hingegen entfällt bei einem monostabilen Wählhebel die Möglichkeit, dem Fahrer anhand der Wählhebelstellung optische bzw. haptische Rückmeldung über den Schaltzustand des Getriebes zu vermitteln. Ferner ist die Realisierung der mechanischen Schaltlogik und der notwendigen Schaltsperren wie beispielsweise die sog. Keylock- und Shiftlock-Sperren bei monostabil ausgebildeten Wählhebeln zumeist schwierig und erfordert eine aufwändige Aktuatorik zur selektiven Sperrung des Wählhebels.

So führt beispielsweise die als sog. Keylock-System bekannte Sicherheitsfunktion beim automatischen Gangwechselgetriebe zu einer Blockierung des Wählhebels in der Position "P", solange der Zündschlüssel abgezogen ist.

Damit wird - bei Betätigungseinrichtungen mit mechanischer Kopplung zum Gangwechselgetriebe - verhindert, dass ein unbeabsichtigtes Betätigen des Wählhebels bei abgezogenen Zündschlüssel oder ausgeschalteter Zündung, und somit ein unbeabsichtigtes Auslegen der Parksperre im Getriebe erfolgen kann, wodurch sich das Fahrzeug unerwünscht in Bewegung setzen könnte.

Ein weiteres Beispiel für eine derartige Sicherheitsfunktion stellt die Shiftlock-Sperre dar, die dazu dient, dass aus Sicherheitsgründen nur bei getretener Bremse aus den Schaltstellungen "P" und "N" heraus geschaltet werden kann. Dies dient ebenfalls dem Zweck, ein unkontrolliertes Anfahren des Fahrzeugs bereits im Moment des Einlegens einer Fahrstufe zu verhindern.

Die bekannten, monostabil ausgebildeten Betätigungseinrichtungen haben ferner den Nachteil, dass sich der Fahrer an ein neues Bedienkonzept mit dem stets in die Mittelstellung zurückstrebenden Hebel gewöhnen muss, wobei sich dieses Bedienkonzept erheblich von der traditionellen Getriebebetätigung unterscheidet. Zudem umfassen derartige monostabil ausgebildete Betätigungseinrichtungen im Allgemeinen eine Mehrzahl von Aktuatoren zur selektiven Sperrung unzulässiger Schaltbefehle in Abhängigkeit vom Fahrzustand des Kraftfahrzeugs, was konstruktiv aufwändig ist und entsprechende Kosten verursacht.

Mit diesem Hintergrund ist es somit die Aufgabe der vorliegenden Erfindung, eine Betätigungseinrichtung für ein Gangwechselgetriebe zu schaffen, mit der die genannten, im Stand der Technik vorhandenen Nachteile überwunden werden. Mit der Erfindung soll dabei ermöglicht werden, dass auch bei shift-by-wire-gesteuerten Gangwechselgetrieben die Wählhebelposition stets den tatsächlichen Schaltzustand des Getriebes widerspiegelt, wodurch eine zuverlässige optische und taktile Rückmeldung über den tatsächlichen Schaltzustand des Getriebes realisiert werden soll. Insbesondere soll verhindert werden, dass der Wählhebel im Fall der automatisch eingelegten Parksperre irreführenderweise in einer der Fahrstufenstellungen verbleibt, während im Getriebe hingegen tatsächlich die Parksperre eingelegt ist. Die Betätigungseinrichtung soll dabei gleichzeitig konstruktiv vergleichsweise einfach und kostengünstig sowie robust ausgeführt sein.

Diese Aufgabe wird durch eine Betätigungseinrichtung mit den Merkmalen des Patentanspruchs 1 gelöst.

### Bevorzugte Ausführungsformen sind Gegenstand der Unteransprüche.

In für sich genommen zunächst bekannter Weise umfasst die Betätigungseinrichtung gemäß der vorliegenden Erfindung einen - mindestens eine Schaltgasse aufweisenden Wählhebel und eine Rastiereinrichtung mit einem Rastbolzen, dessen Rastbolzenspitze federbelastet in einer Rastkulisse gleitet. Dabei ist der Wählhebel in Übereinstimmung mit dem traditionellen Bedienkonzept als multistabiles Bedienelement mit jeweils stabilen Wählhebelstellungen ausgebildet.

Die Betätigungseinrichtung weist eine Aktuatoreinrichtung zur aktuatorischen Bewegung des Wählhebels auf, insbesondere zur selbsttätigen Rückführung des Wählhebels in die Parksperrenstellung im Falle von Auto-P. Dabei weist die Aktuatoreinrichtung eine aktuatorisch - beispielsweise elektromotorisch oder elektromagnetisch - angetriebene Trenneinrichtung auf. Mittels der Trenneinrichtung sind Rastbolzen und Rastkulisse aus einer ersten Relativstellung aktuatorisch in eine weitere Relativstellung verbringbar. In der ersten Relativstellung greift der Rastbolzen rastend in eine mit Rastvertiefungen versehene Rastspur der Rastkulisse ein, was den Normalbetrieb der Betätigungseinrichtung darstellt, mit entsprechender Rastierung des Wählhebels in den einzelnen Wählhebelpositionen. In der weiteren Relativstellung jedoch - die der leichtgängigen, automatischen Rückführung des Wählhebels insbesondere in die Parksperrenstellung dient - ist der Rastbolzen außer Eingriff mit der Rastspur der Rastkulisse.

Mit anderen Worten bedeutet dies, dass der im Normalbetrieb vorhandene, rastende Eingriff des Rastbolzens in die Rastkulisse dank der erfindungsgemäßen Aktuatoreinrichtung mit Trenneinrichtung aufgehoben werden kann. Danach lässt sich der Wählhebel leichtgängig und gegebenenfalls selbsttätig in Bewegung setzen, wobei der Wählhebel insbesondere aus jeder Stellung bzw. aus jeder Schaltgasse selbsttätig in die Parksperrenstellung rückgeführt werden kann. Letzteres kann beispielsweise mittels Federkraft erfolgen, da die den Wählhebel bremsenden Reaktionskräfte des Rastbolzens in der Rastkulisse dank der erfindungsgemäßen Trenneinrichtung eliminiert sind.

Falls somit der Fahrzeugführer beispielsweise das manuelle Einlegen der Parksperre beim Abstellen des Fahrzeugs versäumt hat, so wird - bei einem shift by wire gesteuerten Getriebe - die Parksperre durch die Getriebesteuerung automatisch eingelegt, nachdem der Zündschlüssel abgezogen bzw. das Fahrzeug verlassen wurde. Ferner wird - mittels Einsatz der erfindungsgemäßen Aktuatoreinrichtung und beispielsweise einer Rückführfeder - der Wählhebel aus der zuletzt eingelegten Fahrstufenstellung oder Tippgassenstellung automatisch in die Parksperrenstellung verbracht, so dass der tatsächliche Schaltzustand des Getriebes mit der Stellung des Wählhebels schlussendlich wieder übereinstimmt. Auf diese Weise ergibt sich eine stets korrekte Rückmeldung über die eingelegte Parksperre an den Fahrzeugführer, insbesondere im Fall der mittels Auto-P-Funktion automatisch durch das Gangwechselgetriebe eingelegten Parksperre.

Gemäß der Erfindung ist die Trenneinrichtung der Aktuatoreinrichtung als Vorrichtung zur aktuatorischen Bewegung der Rastkulisse relativ zum Gehäusesockel der Betätigungseinrichtung ausgebildet. Dies ist insofern vorteilhaft, als hierbei keine vergleichsweise aufwändige Aktuatorik am Wählhebel selbst angeordnet bzw. mit dem Wählhebel verbunden werden muss. Vielmehr kann auf diese Weise die Freigabe der selbsttätigen Rückführungsbewegung des Wählhebels in die Parksperrenstellung indirekt durch entsprechende Wegbewegung der Rastkulisse aus dem Eingriffsbereich des Rastbolzens in der Rastkulisse erfolgen.

Die Trenneinrichtung ist gemäß einer Ausführungsform der Erfindung als Einrichtung zur Wegbewegung der Rastkulisse im Wesentlichen entlang der Federkraftrichtung des federkraftbeaufschlagten Rastbolzens ausgebildet. Dies bedeutet mit anderen Worten, dass bei dieser Ausführungsform Rastbolzen und Rastkulisse dergestalt außer Eingriff gebracht werden, dass die Rastkulisse - in Richtung der Federkraft des Rastbolzens - vom Rastbolzen im Wesentlichen linear oder bogenförmig wegbewegt wird. Sobald die Rastkulisse auf diese Weise eine genügende Entfernung von der federbelasteten Rastspitze des Rastbolzens erreicht hat, kann die selbsttätige Rückführung des Wählhebels insbesondere in die Parksperrenstellung erfolgen, beispielsweise mittels eines auf den Wählhebel wirkenden Federspeichers.

Nach einer alternativen Ausführungsform der Erfindung ist die Trenneinrichtung zur aktuatorischen Bewegung der Rastkulisse im Wesentlichen senkrecht zur Federkraftrichtung des Rastbolzens ausgebildet. Diese Ausführungsform ist insofern vorteilhaft, als auf diese Weise die Position des Rastbolzens bzw. der Rastbolzenspitze in der Rastkulisse mittels im Wesentlichen geradliniger oder beispielsweise bogenförmiger Bewegung der Rastkulisse relativ zum Rastbolzen gezielt verändert werden kann. Insbesondere kann der Rastbolzen so - mittels entsprechender Verschiebung der Rastkulisse - aktuatorisch in eine andere Schaltspur der Rastkulisse verbracht werden. In dieser anderen Schaltspur der Rastkulisse kann sodann die definierte Rückführung des Wählhebels in die Parksperrenstellung erfolgen, beispielsweise mittels eines auf den Wählhebel wirkenden Federspeichers.

Mit diesem Hintergrund ist es gemäß einer besonders bevorzugten Ausführungsform der Erfindung vorgesehen, dass die Rastkulisse eine Rückführspur zur definierten Rückführung des Rastbolzens - und damit auch des Wählhebels - in die Parksperrenstellung aufweist. Dank der Rückführspur - die vorzugsweise glatt ausgebildet ist, somit keine den Rastbolzen bremsenden Rastvertiefungen aufweist - ergibt sich ein definierter und leichtgängiger Weg zur Rückführung des Rastbolzens bzw. Wählhebels, unterstützt beispielsweise durch Federkraft.

Nach einer weiteren bevorzugten Ausführungsform der Erfindung ist die Rückführspur als schiefe Ebene ausgebildet, wobei das Gefälle der schiefen Ebene in Richtung auf die Parksperrenstellung des Rastbolzens verläuft. Auf diese Weise lässt sich eine besonders einfache und robuste, selbsttätige Rückführung des Rastbolzens und damit des Wählhebels realisieren, sogar ohne dass hierzu zusätzliche Bauteile am Wählhebel erforderlich sind. Selbst ein Federspeicher zur Rückführung des Wählhebels in die Parksperrenstellung kann entfallen, da das Zusammenwirken der als schiefe Ebene ausgebildeten Rückführspur mit der ohnehin federbelasteten Rastbolzenspitze dafür sorgt, dass der Rastbolzen und damit der Wählhebel selbsttätig entlang des Gefälles der Rückführspur in Richtung Parksperrenstellung gleiten.

Eine weitere Ausführungsform der Erfindung sieht vor, dass die Rastkulisse mittels der Trenneinrichtung linear zwischen einer Betriebsstellung und einer Rückführstellung hin und her bewegbar ist. Dank dieser Ausführungsform kann einfach und zuverlässig zwischen Betriebsstellung und Rückführstellung der Trenneinrichtung gewechselt werden, wobei sich die Rastbolzenspitze in der Betriebsstellung der Trenneinrichtung in einer Schaltspur der Rastkulisse befindet, während sich die Rastbolzenspitze in der Rückführstellung der Trenneinrichtung in der Rückführspur der Rastkulisse befindet. Bei dieser Ausführungsform können Schaltspur und Rückführspur auf der Oberfläche der Rastkulisse konstruktiv einfach beispielsweise nebeneinander angeordnet werden.

Nach einer alternativen Ausführungsform der Erfindung ist vorgesehen, dass die Rastkulisse mittels der Trenneinrichtung zwischen einer Betriebsstellung und einer Rückführstellung hin und her drehbar ist. Bei dieser Ausführungsform ergibt sich eine konstruktiv besonders einfache und robuste Realisierung der erforderlichen beweglichen Führung der Rastkulisse im Gehäusesockel der Betätigungseinrichtung. Die Rastkulisse kann dank dieser Ausführungsform beispielsweise mittels schwenkbarer Lagerung auf einem am Gehäusesockel angeordneten Drehbolzen gelagert werden, während Rastspur und Rückführspur beispielsweise entlang bzw. in der Nähe zweier Radien der Rastkulisse in Bezug auf den Drehbolzen angeordnet werden können. Werden Rastspur und Rückführspur dergestalt in der Nähe zweier Radien auf der Rastkulisse angeordnet, so kann zudem der Übertritt der Rastbolzenspitze zwischen Rastspur und Rückführspur insbesondere im Schnittpunkt von Rastspur und Rückführspur, also im Bereich des Drehpunkts der Rastkulisse erfolgen.

Gemäß einer weiteren, bevorzugten Ausführungsform der Erfindung weist die Rastkulisse eine als Verriegelungsspur ausgebildete weitere Führung bzw. Aufnahme für die Rastbolzenspitze auf. Die Verriegelungsspur dient dabei zur verriegelnden Aufnahme des Rastbolzens, insbesondere zum Zweck der Sperrung des Wählhebels in einer bestimmten Wählhebelposition.

Auf diese Weise kann die Rastkulisse nicht nur zur Rastierung sowie zur definierten, aktiven Rückführung des Wählhebels eingesetzt werden, sondern konstruktiv vorteilhaft zusätzlich auch noch zur Verriegelung des Wählhebels beispielsweise in der Parksperrenstellung.

Letzteres ist insbesondere im Zusammenhang mit den weiter oben beschriebenen Sicherheitssperren namens Keylock und Shiftlock von Bedeutung, die dafür sorgen, dass der Wählhebel erst nach dem Einschalten der Zündung und/oder der Betätigung des Bremspedals aus der Parksperrenstellung heraus bewegt werden kann.

Zur vollständigen Verriegelung des Rastbolzens in der Verriegelungsspur der Rastkulisse kann die Rastkulisse beispielsweise - nachdem der Rastbolzen aktuatorisch oder mittels Federkraft in die Verriegelungsspur verbracht wurde - noch weiter bewegt, beispielsweise weiter geschwenkt oder verdreht werden, bis durch das Zusammenwirken von Verriegelungsspur und Wählhebelführung ein die Rastbolzenspitze vollständig einschließender Formschluss zwischen Rastkulisse, Wählhebel und Gehäusesockel entsteht.

Vorzugsweise stellt dabei die Verriegelungsspur auf der Oberfläche der Raslkulisse einen Abzweig der Rastspur dar, wodurch sich ein einfaches Einfahren des Rastbolzens aus der Rastspur in die Verriegelungsspur, und damit eine einfache Umschaltung zwischen Normalbetrieb (Rastbolzen in der Rastspur) und Sperrung des Wählhebels (Rastbolzen in der Verriegelungsspur) ergibt.

Gemäß einer weiteren Ausführungsform der Erfindung schließlich ist vorgesehen, dass die Trenneinrichtung eine aktuatorisch bewegbare Kulissenführung für den Wählhebel umfasst. Dank dieser Ausführungsform ergibt sich ein konstruktiv vorteilhafter Mehrfachnutzen einer in der Betätigungseinrichtung vorhandenen Kulissenführung für den Wählhebel.

Einerseits kann die Kulissenführung im Betrieb der Betätigungseinrichtung eine definierte Führung des Wählhebels in den zulässigen Schaltgassen darstellen, und andererseits kann mittels der aktuatorisch bewegbaren Kulissenführung eine Übertragung von Aktuatorkräften auf den Wählhebel erfolgen. Auf diese Weise kann der Wählhebel aktuatorisch zwischen verschiedenen Schaltgassen bewegt werden, bzw. es kann mittels der Kulissenführung so auf den Wählhebel eingewirkt werden, dass die Rastbolzenspitze aus der Schaltspur der Rastkulisse beispielsweise in die Rückführspur der Rastkulisse gedrängt wird.

Ferner kann dank dieser Ausführungsform auch eine vollständige Sperrung der Rastbolzenspitze in der Verriegelungsspur der Rastkulisse erfolgen, indem die Kulissenführung aktuatorisch soweit verfahren wird, dass der Rastbolzen aufgrund des Zusammenwirkens von Kulissenführung und Verriegelungsspur allseits formschlüssig eingeschlossen ist.

Im Folgenden wird die Erfindung anhand lediglich Ausführungsbeispiele darstellender Zeichnungen näher erläutert. Es zeigt:
- **Fig. 1**: in schematischer Ansicht eine Ausführungsform einer Betätigungseinrichtung gemäß der vorliegenden Erfindung mit verschiebbarer Rastkulisse unter Blickrichtung entlang der Fahrtrichtung eines Kraftfahrzeugs;
- **Fig. 2**: in schematischer Ansicht Rastkulisse und Aktuatoreinrichtung der Betätigungseinrichtung gemäß **Fig. 1** in der Draufsicht;
- **Fig. 3**: in verkleinerter Darstellung nochmals Rastkulisse und Aktuatoreinrichtung gemäß **Fig. 2****;**
- **Fig. 4**: in einer **Fig. 1** entsprechenden Darstellung und Ansicht die Betätigungseinrichtung gemäß **Fig. 1****,** mit Wählhebel und Rastbolzen in der Tipgasse;
- **Fig. 5**: in einer **Fig. 1** und **4** entsprechenden Darstellung und Ansicht die Betätigungseinrichtung gemäß **Fig. 1** und **4****,** mit Rastkulisse in Rückführstellung;
- **Fig. 6**: in einer **Fig. 1** sowie **4** und **5** entsprechenden Darstellung und Ansicht die Betätigungseinrichtung gemäß **Fig. 1** sowie **4** und **5** mit Rastkulisse in Schaltgassenstellung und Wählhebel in Parksperrenstellung;
- **Fig. 7**: in einer **Fig. 1** entsprechenden Darstellung und Ansicht eine weitere Ausführungsform einer erfindungsgemäßen Betätigungseinrichtung mit Trenneinrichtung in der Betriebsstellung;
- **Fig. 8**: in einer **Fig. 1** und **7** entsprechenden Darstellung und Ansicht die Betätigungseinrichtung gemäß **Fig. 7** mit Trenneinrichtung in der Rückführstellung;
- **Fig. 9**: in schematischer Schnittdarstellung eine Ausführungsform einer erfindungsgemäßen Betätigungseinrichtung mit schwenkbarer Rastkulisse;
- **Fig. 10**: in schematischer Darstellung den Schnitt A - A gemäß **Fig. 9** in der Draufsicht auf die Kulissenführung;
- **Fig. 11**: in schematischer Darstellung den Schnitt B - B gemäß **Fig. 9** in der Draufsicht auf die Rastkulisse;
- **Fig. 12**: in schematischer Darstellung den Schnitt C - C durch die Rastkulisse gemäß **Fig. 11****;** und
- **Fig. 13**: in schematischer Darstellung den Schnitt E - E durch die Rastkulisse gemäß **Fig. 11****.**

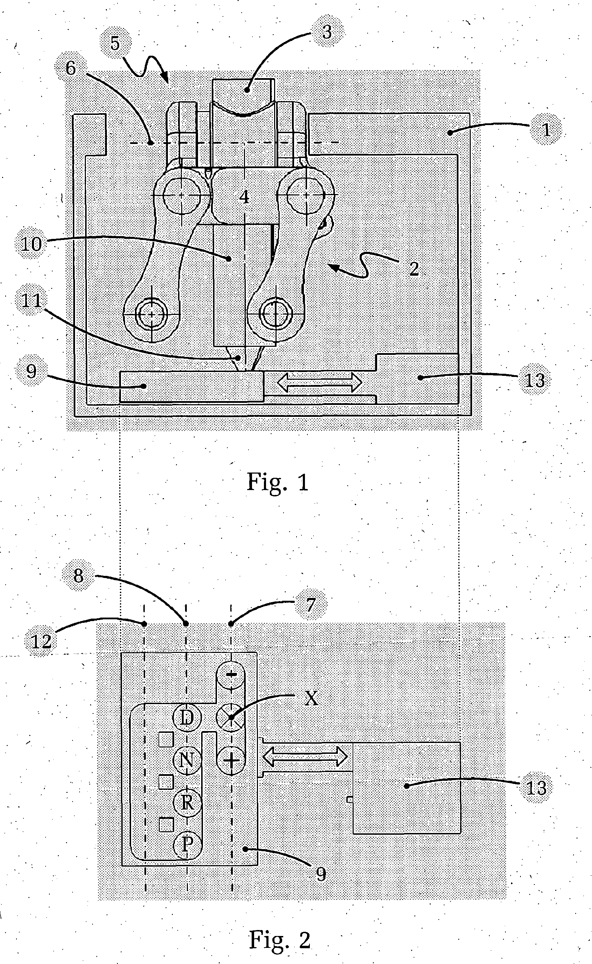

**Fig. 1** zeigt in einer höchst schematisch ausgeführten Ansicht eine Ausführungsform einer erfindungsgemäßen Betätigungseinrichtung für ein Gangwechselgetriebe, mit aufgeschnittenem Gehäuse 1, wobei die Blickrichtung in der Horizontalen entlang der Fahrtrichtung des zugehörigen Kraftfahrzeugs verläuft.

Man erkennt zunächst einmal eine bei dieser Betätigungseinrichtung als Viergelenklagerung 2 ausgelegte Wählhebelführung sowie den nur teilweise sichtbar dargestellten Wählhebel 3. Der Wählhebel 3 ist mit dem Verbindungsglied 4 der Viergelenklagerung 2 mittels eines zusätzlichen Schwenkgelenks 5 verbunden, wobei die Schwenkachse 6 des Schwenkgelenks 5 parallel zur Zeichenblattoberfläche verläuft. Der Wählhebel 3 kann somit dank der Viergelenklagerung 2 seitwärts bewegt bzw. verschwenkt werden, wodurch sich der Wählhebel 3 insbesondere zwischen einer Tipgasse 7 und einer Schaltgasse 8 hin und her bewegen lässt, vgl. **Fig. 2** mit den Tipgasse und Schaltgasse zugeordneten Schaltspuren 7 und 8. Ferner kann der Wählhebel 3 dank des Schwenkgelenks 5 in Fahrtrichtung vor und zurück bewegt werden, um so innerhalb der jeweiligen Schaltgassen 7, 8 die verschiedenen Schaltstellungen bzw. Fahrstufen anzuwählen.

Aus der Fig. 1 geht ferner, insbesondere in Zusammenschau mit **Fig. 2****,** die Anordnung der Rastkulisse 9 und der Eingriff des Rastbolzens 10 mit der Rastbolzenspitze 11 in die Rastkulisse 9 hervor.

Die Rasikulisse 9 ist in **Fig. 2** in der Draufsicht dargestellt. Man erkennt, dass die Rastkulisse 9 mehrere Schaltspuren 7, 8 und 12 aufweist, in denen die Rastbolzenspitze 11 gleiten kann, wodurch wiederum der Wählhebel 3 in entsprechende Wählhebelstellungen geführt bzw. dort eingerastet werden kann. Die Rastkulisse 9 umfasst bei der dargestellten Ausführungsform eine als Rastspur 8 ausgebildete Schaltspur mit vier Vertiefungen P, R, N, und D, die den vier Wählhebelstellungen P, R, N, und D zugeordnet sind. Befindet sich somit der Wählhebel in der Schaltgasse und damit die Rastbolzenspitze 11 in der Schaltspur 8 der Rastkulisse 9, so können durch manuelle Betätigung des Wählhebels 3 die entsprechenden vier Wählhebelstellungen P, R, N oder D ausgewählt werden. Dabei fährt die Rastbolzenspitze 11 in die entsprechende Vertiefung P, R, N oder D der Rastkulisse 11 ein, und fixiert damit den Wählhebel 3 in der angewählten Position.

Außer der Rastspur 8 umfasst die Rastkuhsse 9 eine Tipspur 7 sowie ferner eine Rückführspur 12. Die Tipspur 7 der Rastkulisse 9 wird benötigt, wenn der Wählhebel 3 in die entsprechende Tipgasse 7 bewegt wird, um dort manuell gesteuerte Gangwechsel vorzunehmen. Die Tipspur 7 der Rastkulisse 9 weist lediglich eine mittig in der Tipspur 7 angedeutete Rastvertiefung X auf, da der Wählhebel 3 sich in der Tipgasse 7 monostabil verhalten soll, also nach entsprechender Betätigung nicht in den Endstellungen "+" und "-" verharren, sondern stets in die Mittelstellung X zurückkehren soll.

Die auf der Rastkulisse 9 zeichnungsbezogen links angeordnete Rückführspur 12 hingegen dient der aktuatorisch gesteuerten automatischen Nachführung des Wählhebels 3 in die Parksperrenstellung, falls im Getriebe mittels der Auto-P-Funktion automatisch die Parksperre eingelegt worden sein sollte. Hierzu lässt sich die Rastkulisse 9 mittels eines beispielsweise elektromotorischen Aktuators 13 zeichnungsbezogen seitwärts hin oder her bewegen, so dass die Rastbolzenspitze 11 in die gewünschte Schaltspur 7, 8 oder 12 der Rastkulisse 9 geführt wird, hier insbesondere in die Rückführspur 12 der Rastkulisse 9.

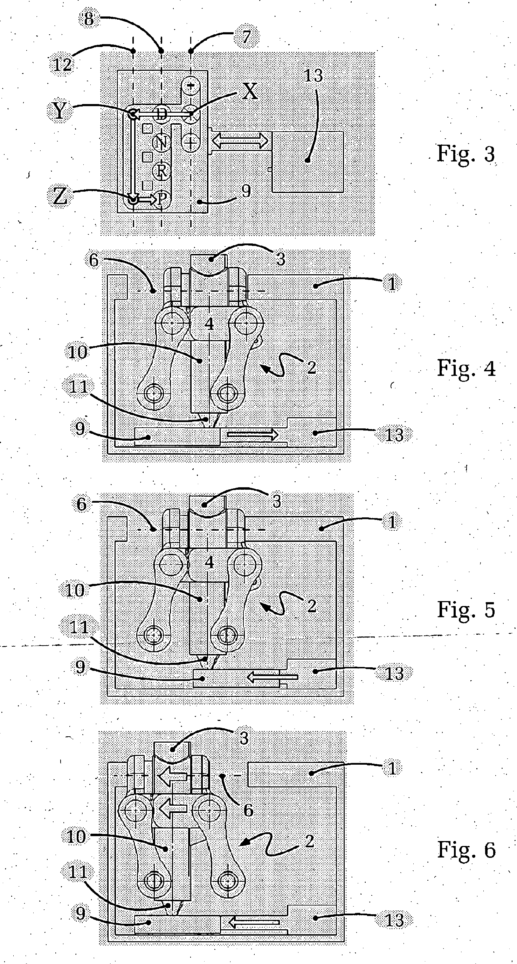

Ein Beispiel für einen dementsprechenden Ablauf der Vorgänge in der Betätigungseinrichtung ist in den **Fig. 3** bis **6** dargestellt. Zur erleichterten Übersicht entspricht **Fig. 3** nochmals der Darstellung in **Fig. 2****,** während **Fig. 4** bis **6** die entsprechenden Ablaufschritte bei der aktuatorischen Bewegung der Rastkulisse 9 und damit auch des Wählhebels 3 zeigen.

Anfänglich befinde sich der Wählhebel 3 in der Tipgasse 7, vgl. **Fig. 4****,** und somit die Rastbolzenspitze 11 in der auf der Rastkulisse zeichnungsbezogen rechts befindlichen Tipspur 7 der Rastkulisse 9 bei Position X. Mit dem Wählhebel 3 in dieser Position werde das Fahrzeug vom Fahrer abgestellt und verlassen. Das Abziehen des Zündschlüssels bzw. das Verlassen des Fahrzeugs werde von der Getriebesteuerung registriert, weshalb die Getriebesteuerung aus Sicherheitsgründen im Getriebe automatisch die Parksperre eingelegt habe.

Anschließend wird von der Getriebesteuerung die Aktuatorik 13 der Betätigungseinrichtung aktiviert. Der Aktuator 13 verschiebt nun die Rastkulisse 9 aus der Position gemäß **Fig. 4** (Rastbolzenspitze 11 bei Position X in der Tipspur 7 gemäß **Fig. 3**) in die Position gemäß **Fig. 5** (Rastbolzenspitze 11 bei Position Y in der Rückführspur 12 gemäß **Fig. 3**). In dieser Position der Rastbolzenspitze 11 setzt die Rastkulisse 9 der Bewegung der Rastbolzenspitze 11 lediglich einen minimalen Widerstand entgegen, da die Rückführspur 12 keine Rastvertiefungen enthält. Daher kann der Wählhebel 10 nun beispielsweise mittels geringer Federkraftbeaufschlagung leichtgängig von Position Y nach Position Z gemäß **Fig. 3** rückgeführt werden.

Nach der Rückführbewegung des Wählhebels aus Position Y nach Position Z wird schließlich die Rastkulisse 9 wieder mittels des Aktuators 13 zeichnungsbezogen nach links verschoben, bis sich die Situation gemäß **Fig. 6** ergibt. Dabei erfolgt zunächst einmal eine Verlagerung der Rastbolzenspitze 11 aus der Position Z in die Position P gemäß **Fig. 3****,** wobei die Rastbolzenspitze 11 in die Rastvertiefung P auf der Rastkulisse 9 einfährt. Bei der anschließenden Weiterbewegung der Rastkulisse 9 zeichnungsbezogen nach links erfolgt somit eine Mitnahme der Rastbolzenspitze 11 und damit auch des Wählhebels 3, wodurch der Wählhebel 3 mittels entsprechender Bewegung der Viergelenklagerung 2 zurück in die Schaltgasse 8 bewegt wird, wie aus **Fig. 6** in Zusammenschau mit **Fig. 3** ersichtlich.

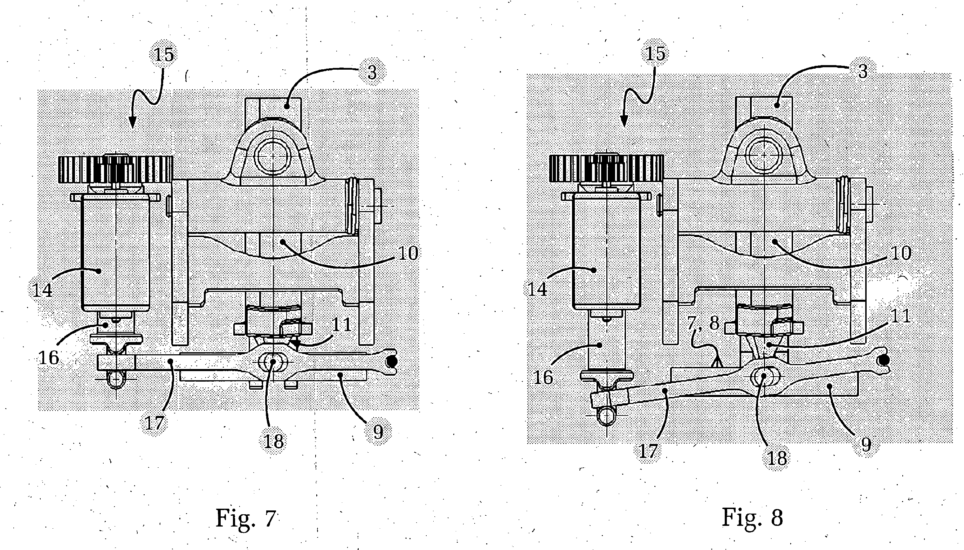

In den **Fig. 7** und **8** ist eine alternative Ausführungsform für eine erfindungsgemäße Betätigungseinrichtung dargestellt. Die Blickrichtung verläuft bei den Darstellungen gemäß **Fig. 7** und **8** dabei wieder in der Horizontalen entlang der Fahrtrichtung des zugehörigen Kraftfahrzeugs. Bei der hier dargestellten Betätigungseinrichtung umfasst die Trenneinrichtung zur Trennung des Eingriffs zwischen Rastbolzen 10 und Rastkulisse 9 einen elektromotorischen Aktuator 14 mit Zahnradgetriebe 15 und Linearspindel 16. Im Unterschied zu der Ausführungsform gemäß **Fig. 1** bis **6** **wird** die Rastkulisse 9 bei der Ausführungsform gemäß **Fig. 7** und **8** nicht horizontal verschoben, sondern durch die Aktuatoreinrichtung 14, 15, 16 vielmehr in der Vertikalen bewegt.

Dabei entspricht die Darstellung von **Fig. 7** der Betriebsstellung der Betätigungseinrichtung, bei der die Rastbolzenspitze 11 sich im normalen Eingriff mit den auf der Rastkulisse 9 angeordneten Rastspuren 7, 8 befindet. Zur automatischen Rückführung des Wählhebels 3 aus einer der Fahrstufenstellungen in die Parksperrenstellung wird der elektromotorische Aktuator 14 aktiviert, wodurch die Linearspindel 16 zeichnungsbezogen nach unten ausfährt. Hierdurch wird über den Kipphebel 17 die mit den Kipphebel 17 über die Achse 18 verbundene Rastkulisse 9 ebenfalls zeichnungsbezogen nach unten verschoben, wodurch die Rastbolzenspitze 11 außer Eingriff mit den zugehörigen Rastspuren 7, 8 der Rastkulisse 9 gerät. Anschließend lässt sich der Wählhebel 3 wieder leichtgängig und selbsttätig - beispielsweise mittels Federkraftbeaufschlagung - in die Parksperrenstellung zurückführen.

Nachdem der Wählhebel 3 auf diese Weise in die Parksperrenstellung zurückgefallen ist, wird der elektromotorische Aktuator 14 mit umgekehrter Drehrichtung aktiviert, wodurch die Linearspindel 16 wieder eingefahren und die Rastkulisse 9 mittels des Kipphebels 17 wieder in die Betriebsstellung gemäß **Fig. 7** zurück verbracht wird.

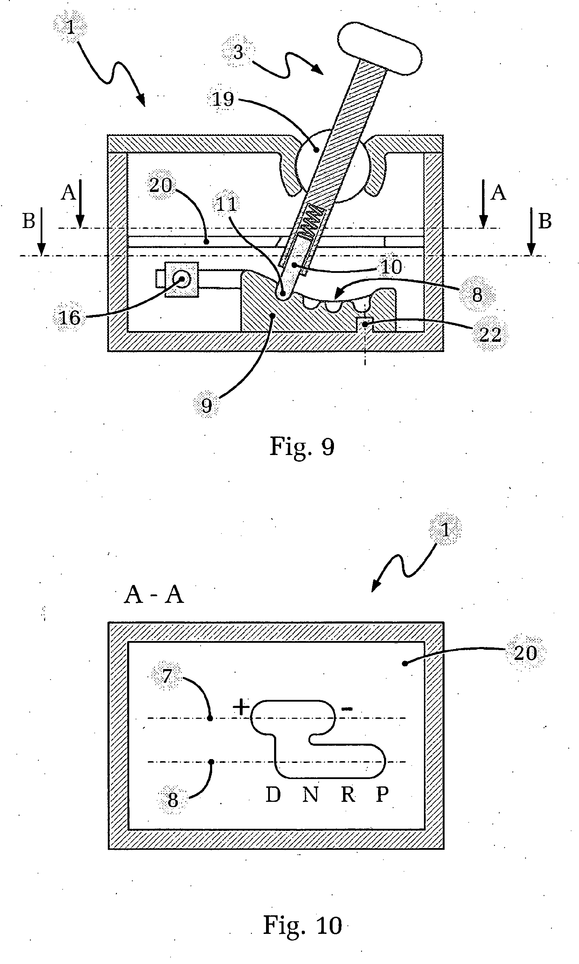

Die **Fig. 9** bis **13** zeigen in äußerst schematischer und nicht maßstabsgetreuer Darstellung eine weitere Ausführungsform für eine erfindungsgemäße Betätigungseinrichtung. Die Fahrtrichtung des Kraftfahrzeugs verläuft in den **Fig. 9** bis **11** dabei in der Horizontalen.

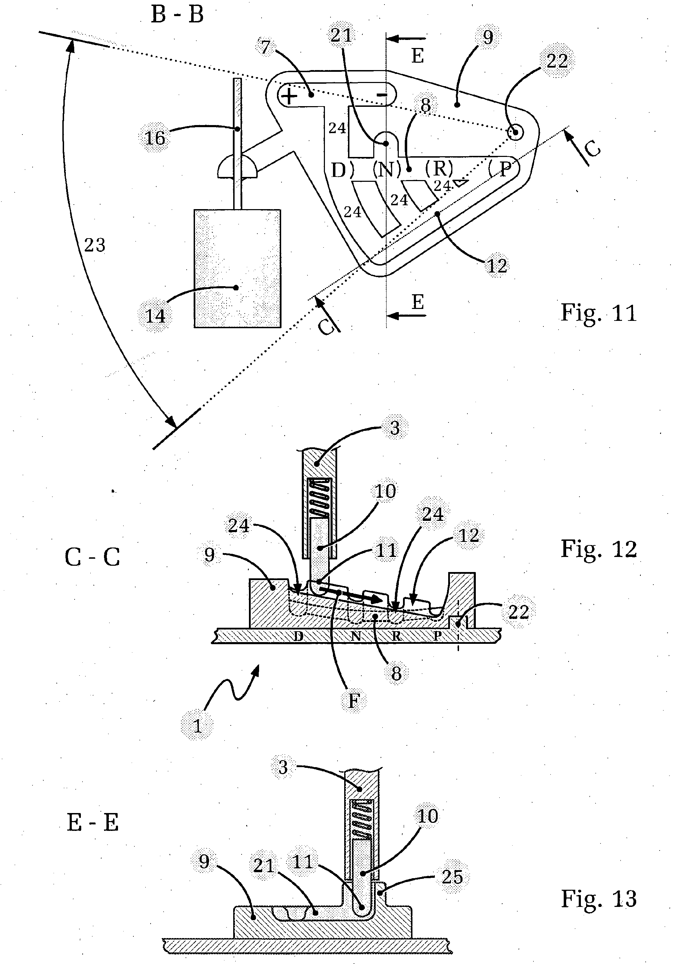

In **Fig. 9** erkennt man zunächst einmal wieder einen Wählhebel 3, der über ein Kugelgelenk 19 im Gehäuse 1 der Betätigungseinrichtung gelagert ist. Der Wählhebel 3 besitzt einen federbelastet im Wählhebel 3 gelagerten Rastbolzen 10, wobei der Rastbolzen 10 mit der Rastbolzenspitze 11 wieder in eine Rastkulisse 9 eingreift. Die Rastkulisse 9 besitzt eine Anzahl von Rastspuren 7, 8, 12 und 21 (vgl. **Fig. 11**), wobei die in **Fig. 9** im Schnitt erkennbare Schaltspur 8 wieder mit einer Anzahl von Rastvertiefungen P, R, N, D für die Wählhebelstellungen P, R, N und D versehen ist.

Die dargestellte Betätigungseinrichtung umfasst ferner eine Wählhebelkulisse 20 wie in **Fig. 10** in schematischer Draufsicht gemäß Schnitt A -A aus **Fig. 9** dargestellt. Man erkennt die zur manuellen Gangwahl dienende Tipgasse 7 sowie die Schaltgässe 8, in der die Wählhebelstellungen P, R, N und D ausgewählt werden können.

**Fig. 11** zeigt in der Draufsicht gemäß Schnitt B - B aus **Fig. 9** die Rastkulisse 9 mit den verschiedenen zur Führung bzw. Rastierung der Rastbolzenspitze vorgesehenen Rastspuren 7, 8, 12 und 21, wobei hier der besseren Übersicht halber das Gehäuse 1 nicht dargestellt ist. Man erkennt wieder die Tipspur 7 (ohne Rastvertiefungen für die Rastbolzenspitze 11, da sich der Wählhebel 3 in der Tipgasse 7 monostabil verhalten soll), ferner die Schaltspur 8 mit den jeweiligen Rastvertiefungen für die Wählhebelstellungen P, R, N und D, sowie darüber hinaus eine winklig zur Schaltspur 8 angeordnete Rückführspur 12, die ebenfalls keine Rastvertiefungen aufweist. Schließlich umfasst die Rastkulisse 9 noch eine Verriegelungsspur 21. Bei der dargestellten Ausführungsform ist die Verriegelungsspur 21 der Wählhebelstellung "N" wie Neutral zugeordnet, es kann jedoch ebenso eine (hier nicht dargestellte) Verriegelungsspur insbesondere der Wählhebelstellung "P" wie Parksperre zugeordnet sein.

Wie eine Zusammenschau der **Fig. 11** mit **Fig. 9** oder **Fig. 12** ergibt, ist die Rastkulisse 9 auf einem Drehbolzen 22 schwenkbar gegenüber dem Gehäuse 1 der Betätigungseinrichtung gelagert. Der Antrieb zur aktuatorischen Verschwenkung der Rastkulisse 9 um den Drehpunkt 22 ist höchst schematisch in **Fig. 11** dargestellt. Es handelt sich dabei um einen Servomotor 14 mit Linearspindel 16, der die Rastkulisse 9 innerhalb des Schwenkwinkels 23 um den Drehbolzen 22 hin und her schwenken kann.

**Fig. 12** zeigt einen Längsschnitt durch die Rückführspur 12 der Rastkulisse 9 entlang der Schnittlinie C - C in **Fig. 11****.** Strichliert angedeutet erkennt man den Verlauf der in der Schnittdarstellung gemäß **Fig. 12** hinter der Zeichenebene befindlichen Rastspur 8 mit den Rastvertiefungen P, R, N und D. Es wird deutlich ersichtlich, dass die Rückführspur 12, unter einem Gefälle in Richtung auf die Parksperrenstellung P verläuft. Dieses Gefälle der Rückführspur 12 dient der aktuatorisch eingeleiteten, selbsttätigen Rückführung des Wählhebels 3 in die Parksperrenstellung.

Wurde also durch die Getriebesteuerung mittels Auto-P automatisch die Parksperre im Getriebe eingelegt, wobei der Wählhebel vom Fahrer jedoch in einer Fahrstufenstellung oder auch in der Tipgasse 7 belassen worden sei, so wird von der Getriebesteuerung der Aktuator 14 bestromt, und die Rastkulisse 9 um den (maximalen) Schwenkwinkel 23 gem. **Fig. 11** verschwenkt. Hierdurch gelangt die Rastbolzenspitze 11 unabhängig von der zuvor eingelegten Fahrstufe - über die auf der Rastkulisse 9 angeordneten Querverbindungen 24 zwischen Tippgasse 7, Rastspur 8 und Rückführspur 12 - auf die abfallende Rückführspur 12. Aufgrund des Gefälles der Rückführspur 12 entsteht nun durch die federbelastete Rastbolzenspitze 11 eine Hangabtriebskraft F, die den Rastbolzen 10 und damit den Wählhebel 3 ohne jede weitere Aktuatorik selbsttätig in die Parksperrenstellung P fallen lässt.

**Fig. 13** zeigt eine geschnittene Ansicht der Verriegelungsspur 21 entlang der Schnittlinie E - E in **Fig. 11****.** Die Verriegelungsspur 21 dient der Verriegelung der Rastbolzenspitze 11 und damit des Wählhebels 3 in einer bestimmten Wählhebelstellung, beispielsweise zur Realisierung der Sicherheitsfunktionen Keylock und/oder Shiftlock. Hierzu wird die Rastkulisse 9 bei geeigneter Wählhebelstellung mittels des Servoaktuators 14 und der Linearspindel 16 gemäß **Fig. 11** zeichnungsbezogen nach unten verschwenkt, wodurch die Rastbolzenspitze 11 in die in **Fig. 13** gezeigte Position in der Verriegelungsspur 21 der Rastkulisse 9 gelangt. Zur sicheren Verriegelung ist die Verriegelungsspur 21 mit einem Kragen 25 versehen, so dass der Rastbolzen 10 bei Kraftaufbringung auf den Wählhebel 3 nicht aus der Verriegelungsspur 21 herausspringen kann.

Im Ergebnis wird damit deutlich, dass mit der Erfindung eine Betätigungseinrichtung für Kraftfahrzeuggetriebe geschaffen wird, die gegenüber dem Stand der Technik den Vorteil einer stets mit dem tatsächlichen Schaltzustand des Getriebes übereinstimmenden Wählhebelposition aufweist, wobei die zur Rückführung des Wählhebels eingesetzte Aktuatorik konstruktiv besonders einfach, robust und damit kostengünstig ausgeführt werden kann. Ferner kann dank der Erfindung sichergestellt werden, dass sich der Wählhebel aus jeder beliebigen Stellung sicher in die Parksperrenstellung zurückführen lässt. Auf diese Weise ermöglicht die Erfindung eine für den Fahrer zuverlässige optische wie auch taktile Rückmeldung über den tatsächlichen Schaltzustand des Getriebes, insbesondere im Fall der automatisch eingelegten Parksperre mittels "Auto-P".

Dank kostengünstiger Realisierbarkeit und Zuverlässigkeit leistet die Erfindung einen maßgeblichen Beitrag zur Verbesserung von Ergonomie und Sicherheit bei Betätigungseinrichtungen für Kraftfahrzeuggetriebe, insbesondere bei der Anwendung im Bereich der Automatikgetriebe.

### Bezugszeichenliste

- 1: Gehäuse
- 2: Viergelenklagerung
- 3: Wählhebel
- 4: Verbindungsglied
- 5: Schwenkgelenk
- 6: Schwenkachse
- 7: Tipgasse, Tipspur
- 8: Schaltgasse, Schaltspur
- 9: Rastkulisse
- 10: Rastbolzen
- 11: Rastbolzenspitze
- 12: Rückführspur
- 13, 14: Aktuator
- 15: Getriebe
- 16: Linearspindel
- 17: Kipphebel
- 18: Achse
- 19: Kugelgelenk
- 20: Wählhebelkulisse
- 21: Verriegelungsspur
- 22: Drehbolzen
- 23: Schwenkwinkel
- 24: Querverbindungen
- 25: Kragen

## Patentansprüche

1. Betätigungseinrichtung zur Auswahl von Schaltstufen eines shift-by-wire-Gangwechselgetriebes, die Betätigungseinrichtung umfassend einen zwischen zumindest einer Fahrstufenstellung und einer Parksperrenstellung bewegbaren Wählhebel (3) mit stabilen Wählhebelstellungen sowie eine Rastiereinrichtung mit federbelastetem Rastbolzen (10) und Rastkulisse (9), und eine Aktuatoreinrichtung zur aktuatorischen Bewegung des Wählhebels (3), **dadurch gekennzeichnet, dass** die Aktuatoreinrichtung eine aktuatorisch angetriebene Trenneinrichtung (13) umfasst, wobei die Trenneinrichtung (13) eine Einrichtung zur aktuatorischen Bewegung der Rastkulisse (9) relativ zu einem Gehäusesockel (1) der Betätigungseinrichtung ist, wobei Rastbolzen (10) und Rastkulisse (9) mittels der Trenneinrichtung (13) aus einer ersten Relativstellung, in welcher der Rastbolzen (10) in eine Schaltspur (8) der Rastkulisse (9) eingreift, in eine weitere Relativstellung verbringbar sind, in welcher der Rastbolzen (10) außer Eingriff mit der Schaltspur (8) ist.

2. Betätigungseinrichtung nach Anspruch 1, **dadurch gekennzeichnet, dass** die Trenneinrichtung (14) zur aktuatorischen Wegbewegung der Rastkulisse (9) im Wesentlichen entlang der Federkraftrichtung des Rastbolzens (10) ausgebildet ist.

3. Betätigungseinrichtung nach Anspruch 1, **dadurch gekennzeichnet, dass** die Trenneinrichtung (13) zur aktuatorischen Wegbewegung der Rastkulisse (9) im Wesentlichen senkrecht zur Federkraftrichtung des Rastbolzens (10) ausgebildet ist.

4. Betätigungseinrichtung nach Anspruch 3, **dadurch gekennzeichnet, dass** die Rastkulisse (9) eine Rückführspur (12) zur Rückführung des Rastbolzens (10) in die Parksperrenstellung aufweist.

5. Betätigungseinrichtung nach Anspruch 4, **dadurch gekennzeichnet, dass** die Rückführspur (12) als schiefe Ebene mit Gefälle in Richtung auf die Parksperrenstellung ausgebildet ist.

6. Betätigungseinrichtung nach einem der Ansprüche 1 bis 5, **dadurch gekennzeichnet, dass** die Rastkulisse (9) mittels der Trenneinrichtung (13) linear zwischen einer Betriebsstellung und einer Rückführstellung hin und her bewegbar ist.

7. Betätigungseinrichtung nach einem der Ansprüche 1 bis 5, **dadurch gekennzeichnet, dass** die Rastkulisse (9) mittels der Trenneinrichtung (13) zwischen einer Betriebsstellung und einer Rückführstellung hin und her drehbar ist.

8. Betätigungseinrichtung nach einem der Ansprüche 1 bis 7, **dadurch gekennzeichnet, dass** die Rastkulisse (9) eine Verriegelungsspur (21) zur verriegelnden Aufnahme des Rastbolzens (10) aufweist.

9. Betätigungseinrichtung nach Anspruch 7, **dadurch gekennzeichnet, dass** die Verriegelungsspur (21) einen Abzweig der Rastspur (8) darstellt.

10. Betätigungseinrichtung nach einem der Ansprüche 1 bis 9, **dadurch gekennzeichnet, dass** die Trenneinrichtung eine aktuatorisch bewegbare Kulissenführung für den Wählhebel umfasst.

## Claims

1. Operating device for the selection of shift steps of a shift-by-wire gear-change transmission, the operating device comprising a selector lever (3) moveable between at least one drive-step position and a parking-lock position and having stable selector lever positions and also a latching device with a spring-loaded latching bolt (10) and with a latching slot assembly (9), and an actuator device for the actuating movement of the selector lever (3), **characterized in that** the actuator device comprises an actuatingly driven separating device (13), the separating device (13) being a device for the actuating movement of the latching slot assembly (9) in relation to a housing base (1) of the operating device, the latching bolt (10) and latching slot assembly (9) being capable of being brought by means of the separating device (13) out of the first relative position, in which the latching bolt (10) engages into a shift track (8) of the latching slot assembly (9), into a further relative position, in which the latching bolt (10) is out of engagement with the shift track (8).

2. Operating device according to Claim 1, **characterized in that** the separating device (14) is designed for the actuating travel movement of the latching slot assembly (9) essentially along the spring-force direction of the latching bolt (10).

3. Operating device according to Claim 1, **characterized in that** the separating device (13) is designed for the actuating travel movement of the latching slot assembly (9) essentially perpendicularly to the spring-force direction of the latching bolt (10) .

4. Operating device according to Claim 3, **characterized in that** the latching slot assembly (9) has a return track (12) for returning the latching bolt (10) into the parking-lock position.

5. Operating device according to Claim 4, **characterized in that** the return track (12) is designed as an inclined plane with a downward gradient in the direction of the parking-lock position.

6. Operating device according to one of Claims 1 to 5, **characterized in that** the latching slot assembly (9) is moveable to and fro linearly between an operating position and a return position by means of the separating device (13).

7. Operating device according to one of Claims 1 to 5, **characterized in that** the latching slot assembly (9) is rotatable to and fro between an operating position and a return position by means of the separating device (13).

8. Operating device according to one of Claims 1 to 7, **characterized in that** the latching slot assembly (9) has a locking track (21) for the locking reception of the latching bolt (10).

9. Operating device according to Claim 7, **characterized in that** the locking track (21) is a branch of the latching track (8).

10. Operating device according to one of Claims 1 to 9, **characterized in that** the separating device comprises an acutatingly moveable slotted guide for the selector lever.

## Revendications

1. Dispositif d'actionnement pour la sélection de rapports de changement de vitesses d'une boîte de vitesses de type « shift-by-wire », le dispositif d'actionnement comportant un levier sélecteur (3) présentant des positions stables de levier sélecteur et pouvant être déplacé entre au moins une position de rapport de conduite et une position de verrouillage de stationnement ainsi qu'un dispositif d'encliquetage comprenant une goupille d'encliquetage (10) sollicitée par ressort et une coulisse d'encliquetage (9), et un dispositif d'actionneur pour le déplacement par actionneur du levier sélecteur (3), **caractérisé en ce que** le dispositif d'actionneur comporte un dispositif de séparation (13) entraîné par actionneur, le dispositif de séparation (13) étant un dispositif pour le déplacement par actionneur de la coulisse d'encliquetage (9) par rapport à une base de boîtier (1) du dispositif d'actionnement, la goupille d'encliquetage (10) et la coulisse d'encliquetage (9) pouvant être amenées, au moyen du dispositif de séparation (13), d'une première position relative dans laquelle la goupille d'encliquetage (10) vient en prise dans une piste de commutation (8) de la coulisse d'encliquetage (9) à une autre position relative dans laquelle la goupille d'encliquetage (10) est hors de prise avec la piste de commutation (8).

2. Dispositif d'actionnement selon la revendication 1, **caractérisé en ce que** le dispositif de séparation (14) est réalisé pour l'éloignement par actionneur de la coulisse d'encliquetage (9) essentiellement le long de la direction de force élastique de la goupille d'encliquetage (10).

3. Dispositif d'actionnement selon la revendication 1, **caractérisé en ce que** le dispositif de séparation (13) est réalisé pour l'éloignement par actionneur de la coulisse d'encliquetage (9) essentiellement perpendiculairement à la direction de force élastique de la goupille d'encliquetage (10).

4. Dispositif d'actionnement selon la revendication 3, **caractérisé en ce que** la coulisse d'encliquetage (9) comprend une piste de retour (12) pour le retour de la goupille d'encliquetage (10) à la position de verrouillage de stationnement.

5. Dispositif d'actionnement selon la revendication 4, **caractérisé en ce que** la piste de retour (12) est réalisée sous forme de plan incliné de pente en direction de la position de verrouillage de stationnement.

6. Dispositif d'actionnement selon l'une quelconque des revendications 1 à 5, **caractérisé en ce que** la coulisse d'encliquetage (9) peut être animée d'un mouvement de va-et-vient, au moyen du dispositif de séparation (13), de manière linéaire entre une position de fonctionnement et une position de retour.

7. Dispositif d'actionnement selon l'une quelconque des revendications 1 à 5, **caractérisé en ce que** la coulisse d'encliquetage (9) peut être animée d'un mouvement de rotation dans un sens et dans l'autre, au moyen du dispositif de séparation (13), entre une position de fonctionnement et une position de retour.

8. Dispositif d'actionnement selon l'une quelconque des revendications 1 à 7, **caractérisé en ce que** la coulisse d'encliquetage (9) comprend une piste de verrouillage (21) pour recevoir de manière verrouillée la goupille d'encliquetage (10).

9. Dispositif d'actionnement selon la revendication 7, **caractérisé en ce que** la piste de verrouillage (21) constitue une bifurcation de la piste d'encliquetage (8).

10. Dispositif d'actionnement selon l'une quelconque des revendications 1 à 9, **caractérisé en ce que** le dispositif de séparation comporte un guide à coulisse, déplaçable par actionneur, pour le levier sélecteur.
